# EUROPEAN PATENT APPLICATION

(11) **EP 3 686 237 A1**
(43) Date of publication of application: **29.07.2020**
(21) Application number: 18857910.6
(22) Date of filing: 10.09.2018
(51) Int. Cl.: C08K 3/01, C08K 3/22, C09D 167/00, C09D 163/00

(54) **NOVEL GEL-COAT WITH ADDED TITANIUM DIOXIDE AND ALUMINA PARTICLES**

(30) Priority: 20.09.2017 ES 201731136
(71) Applicant: Liderkit SL, 23210 Guarroman (Jaén) (ES)
(72) Inventor: DIAZ CABEZAS, Francisco De Borja, 23210 Guarroman (Jaen) (ES); PERAGÓN ORTEGA, Miguel, 23210 Guarroman (Jaen) (ES)
(74) Representative: Aguilar Catalán, Blanca
(86) International application number: PCT/ES2018/070591
(87) International publication number: WO 2019/058010

(57) **Abstract**

The new gel-coat additivated with titanium dioxide and alumina particles described in this patent has direct application in the field of construction, external parts of construction material surfaces or urban items, and also in the transport sector, as this type of material has photocatalytic properties capable of decomposing the NOx currently found in large cities. Additionally, this new material has self-cleaning, biocidal and deodorizing properties, which allow for its application to the maritime transport sector, where it would help to overcome the induced resistance due to the attachment of sea life to vessel hulls, thus enabling to reduce their cleaning costs.

## Description

### FIELD OF THE INVENTION

This invention falls within the field of advanced composite materials, in particular the field of catalysis. Specifically, this invention refers to the resulting composite materials, which have in their formulation photocatalytic additives such as TiO₂, as well as to its preparation procedure. The composite material obtained has direct application in the construction field, transport by road, rail, air or sea, as well as in the environment in general, as this type of material has self-cleaning, biocidal and deodorizing properties, including decontamination properties in the presence of air and ultraviolet light.

### BACKGROUND OF THE INVENTION

### Atmospheric pollution. NOx and their photochemical degradation through photocatalytic coatings.

Atmospheric pollution causes around 370,000 premature deaths throughout the EU, and around 16,000 in Spain, according to European Commission data. Taking into consideration that these death figures are at least 4 times higher than the ones caused by traffic accidents, this problem takes on an important enough dimension for its scope to be studied and analyzed in detail. According to the European Environment Agency, traffic is one of the major sources of atmospheric pollution in Europe, followed by thermal and industrial plants. In Spain, 34% of nitrogen oxides (NOx) emissions are derived from traffic. In addition to NOx, the atmospheric pollutants with the greatest impact on health are particulate matter (PM) emitted by motor vehicles and industry, along with sulphur dioxide from fossil fuels and diesel fuels. Air quality in urban areas is heavily affected by traffic, this being the primary source of atmospheric emissions of particulate matter (including engine, brake wear, tyres and road surface particles, as well as certain metals related to mechanical wear) and gases such as NOx (generic term encapsulating NO and NO2).

Particulate matter and NOx, together with the ozone and ammoniac, are critical parameters to be in compliance with air quality legislation in cities in Spain and Europe in general. Additionally, NOx contributes to air photochemical pollution, giving rise to what is known as "photochemical smog." This term refers to a complex mixture of products produced from the interaction between sunlight and two of the main composites of motor vehicle exhaust gases, namely nitrogen monoxide and hydrocarbons. Their interaction in the presence of sunlight leads to the formation of highly oxidizing fog, which in the past has provoked severe pollution episodes in big cities. In urban areas, approximately 50% of the NOx emissions are produced by engine combustion in vehicles, while other emission sources are power plants and other industrial sources (U.S. EPA, 1998). The high levels of NOx, in addition to affecting the ozone levels (a secondary pollutant generated in the atmosphere by the reaction of NO2 and organic gaseous precursors) and the formation of acid rain, may adversely affect public health, especially affecting the respiratory system.

While acknowledging the diversity of emission sources, road traffic is one of the main sources which affect the urban population's exposure level to atmospheric pollution. This is due to the fact that the emission is produced in close proximity to the population and in a dispersed manner in large cities. Although motor vehicles comply with increasingly demanding environmental regulations, their continual growth and permanent and progressively indiscriminate use, as well as the growing proliferation of diesel vehicles in the vehicle population, lead to an increasingly complex situation.

The possibility to be able to protect building or vehicle surfaces through coatings capable of degrading this type of organic composites found in the air with which they are in contact, contributing to environmental decontamination and self-cleaning of these surfaces, is highly interesting. Thus, nanoparticle-based coatings which provide physical-chemical properties different from the already existing materials are being researched, in order to offer solutions to the aforementioned problems.

### Problems in the shipping sector due to the attachment of sea life. Photocatalytic coatings on vessel surfaces: a low-cost solution.

In the maritime transport sector, around 36 billion euros per year are spent on non-stick paint and additional fuel costs in order to overcome the induced resistance due to the attachment of sea life to vessel hulls (between 30 and 45% more), making this an increasing issue taking into account global warming. As a result, this sector seeks technical solutions capable of diminishing these effects on vessels.

With the use of these new types of materials on the surfaces of vessels, it has been proven that they prevent the growth of bacteria, algae and fungi on certain surfaces, as these materials have a biocidal effect partly thanks to the appearance of hydroxyl radicals. Thus, the use of this type of materials in the manufacturing of new vessels is a real possibility to reduce maintenance and fuel costs.

### Components of heterogeneous photocatalysis

Titanium dioxide (anatase, brookite and rutile), the anatase phase is the titanium dioxide structure with the highest photocatalytic activity, in spite of being a metastable phase. Since Fujishima and Honda (Fujishima, A.; Honda, K., Nature 1972, 37, 238) discovered in the seventies the photocatalytic dissociation of water on titanium dioxide electrodes (Hashimoto K. et al. J. Appl. Phys. 2005, 44 (12) 8269), the development of a large amount of research based on this photocatalytic semiconductor started.
- Support materials. The need to use supported photocatalysts emerged as a consequence of the high cost of filtration processes aimed at retrieving the photocatalyst. Nonetheless, there are also limitations to be considered when using supported systems. The difficulties in the use of supports are related to both the reduced contact between the pollutant and the photoactive material and the difficulty to achieve a total irradiation of the semiconductor particles. Until now, a large variety of materials has been tested in photocatalysis as a photocatalyst support. The majority of them is based on the use of SiO2 in both glass and fused silica or quartz. Currently, amongst the materials offering great potential as a support, microporous materials such as active carbon, mesoporous materials such as silica or alumina and organometallic compounds, amongst others, can be found. Materials with high transparency in the UV region, as it is the case of polymers, are highly interesting as they facilitate the irradiation of semiconductor particles. These materials are currently being object of numerous studies to be used as a support for photocatalysts of different nature, in spite of their difficulties due to properties such as high thermal sensitivity and low resistance to photodegradation. It is important to highlight that, as well as ultraviolet radiation, the presence of oxygen and water is also necessary (as a source of hydroxyl anions and protons) in order for the photocatalytic process to take place.

Therefore, it is necessary for photocatalytic materials to be in a medium complying with these three requirements for its correct activity.

### Background on methods used to obtain photocatalytic coatings.

One of the most widely used methods to obtain photocatalytic coatings on different substrates by means of sol-gel methodology is the on-site synthesis of TiO2 coating. This sol-gel method consists of the hydrolysis and condensation of the organometallic precursors (titanium isopropoxide, titanium tetrachloride, et cetera) followed by the deposition through dip-coating, spin-coating... of the coating obtained on the substrate to be coated. With this synthetic methodology, the nature of the initially obtained coatings is usually amorphous (a mixture of several structures or phases) and requires a subsequent calcination phase at around 500-600 C for several hours, in order for the titanium oxide coating to have a major anatase phase, which is the most photoactive crystalline structure of TiO2. This path has the disadvantage that coatings undergo high-temperature thermal treatments, and coating materials must withstand these conditions.

Therefore, at the end of the eighties (Takahashi, Y.; Matsuoka, Y. J. Mater. Sci. 1988, 23, 2259) one of the first syntheses of TiO2 coatings was developed, also basing on this on-site methodology. In order to so, diethanolamine (DEA) was used to control the titanium precursor (titanium isopropoxide) hydrolysis phase when water is added. The presence of ethanolamine in the solution gives rise to stabilizing chelates, which react with metal alkoxides through the alcohol exchange reaction. Other stabilizing chelating agents have been used, such as inorganic and organic acids, although these agents may cause acid corrosion on metal substrates. Acetylacetone, which provides stable soles with near neutral pH, has also been used in order to produce coatings on any substrate. All of these on-site synthesis methods required very high thermal treatments in order to obtain the anatase phase and achieve a good adherence to the substrate.

Other synthetic methods have been developed in order to obtain photocatalytic coatings with titanium dioxide, in which TiO2 nanoparticles are initially synthesized and later placed on the substrate, therefore avoiding thermal treatments and obtaining TiO2 nanoparticle coatings (anatase phase), synthesized through hydrolysis in the aqueous medium of titanium tetrakis (isopropoxide), (Peiró, A. M. et al. Appl. Catal. B-Environ. 2001, 30, 359-373).

A highly common methodology to obtain coatings using previously synthesized nanoparticles is layer-by-layer deposition. This is how photocatalytic coatings have been developed on PET substrates, basing on the assembling of different layers from suspension nanoparticles with opposite charge. With this methodology, coatings on substrates sensitive to high temperatures, such as metals, textiles, PET... can be obtained, as high-temperature thermal treatments are no longer required after deposition in order to induce TiO2 crystallinity (Sánchez, B. et al. Appl. Catal. B- Environ. 2006, 66, 295). However, it is worth highlighting that electrostatic interaction amongst layers may occasionally not be enough (to create a proper adherence). In such a way that, considering all the disadvantages of the previously described synthetic methods, in recent years new techniques based on sol-gel synthesis of inorganic-organic hybrids have been developed in order to obtain photocatalytic coatings.

Patent WO 2010/122182 has recently proposed a method in order to obtain hybrid photocatalytic coatings through the sol-gel method in soft synthesis conditions, from a specific percentage of crystalline commercial TiO2 nanoparticles in anatase phase by means of using a polyetheramine-type catalyst.

Surprisingly, it has now been discovered that by using a completely different catalyst consisting of inorganic oxide nanoparticles, such as silicon oxide or titanium oxide previously functionalized with certain functional groups, alternative photocatalytic coatings can be obtained on various substrates, metal or of other kind, also in soft synthesis conditions.

On the possible uses of this type of materials, a wide range of practical applications, all targeting the use of these coatings for anti-corrosion or environmental purposes, is being discovered. Patent WO 1998/32473 already specified the use of this type of coatings as possible absorption filters of environment volatiles through the use of additives. More recently, patent US 1996/5571359 specifies methods for the preparation of photocurable inks and pigments basing on titanium dioxide, and patent US 2006/7144840 B2 mentions procedures and coatings basing on TiO2 crystals, their physical-chemical properties and their field of applications. Also in patent EP 2001/1069950 B1, a different photocatalytic composition is proposed, obtained by adding commercial TiO2 nanoparticles to a commercial aqueous colloidal silicon dioxide dispersion for its possible use as paint or filter coating. In patent US 2007/0166467 A1, its application on TiO2 coatings with a silane base resistant to corrosion in construction materials was proposed. Finally, it is worth highlighting patent ES 2285868 T3 when referring to the possible use of photocurable paints for glass through the use of this type of coatings.

To sum up, as shown in the state of the art of this patent, regarding heterogeneous catalysis and, more specifically, photocatalytic coatings, there is an actual growing need by industry and society to obtain new materials alternative to the already existing ones, which improve the current photocatalytic properties and are economically competitive and environmentally friendly.

Furthermore, in their preparation process they will have good adherence to substrates, without high-temperature thermal treatments (which significantly reduces the amount of substrates), in order to obtain a greater universality in their application to substrates in different industrial processes and coating processes.

The physical-chemical principle for all the aforementioned uses is the same: heterogeneous photochemical reactions catalyzed on the surface in the presence of ultraviolet radiation. In order to better describe this type of reactions, it is necessary to describe in further detail its different components:
- Oxidized Compounds. They are the target molecules degraded and decomposed
   during the chemical reaction. For instance, in the early eighties the first air heterogeneous catalysis tests for toluene removal were performed. Subsequently, research was carried out with a large number and variety of composites aimed to organic residue purification in residual waters. The oxidation of chlorinate organic composites raised interest due to their high toxicity and resistance to degradation. Currently, they are used in the decomposition of nitrogen oxides as an atmospheric pollutant.
- Photocatalysts. In heterogeneous photocatalysis, the choice of the photocatalyst is crucial, as it must have an appropriate redox potential. It must also have a photoactivation range within the wavelength interval corresponding to visible-UV radiation (200-800 nm), in order to be able to use solar light as a radiation source, thus saving energy considerably. The photocatalyst must also have a high specific surface area, in order to facilitate absorption. TiO2 is the most used semiconductor, as it is chemically and biologically inert, non-toxic, abundant and economical. It also has good photocatalytic properties, as it has valence electrons in its conduction band able to be excited by a radiation energy within the ultraviolet light energy range (λ=200-400 nm). Furthermore, it can be contained in rich environments, both hydroxyl anions and protons (Balasubramanian G. et al. "Synthesis of Inorganic Materials" Wiley- VCH, Weinheim, (2005). The crystallinity of this semiconductor becomes essential in order to have a good photocatalytic activity. Thus, from the three most common crystalline forms of

### REFERENCES USED

The references used in the drafting of this patent are the following:

### PATENTS:

- WO 2010/122182 published on 29.02.2012 "Method for obtaining photocatalytic coatings on metal substrates" (by Miguel Yolanda, Rufina; Villaluenga Arranz, Irune; Porro Gutiérrez, Antonio), referring to a method in order to obtain hybrid photocatalytic coatings through the sol-gel method in soft synthesis conditions, from a specific percentage of crystalline commercial TiO2 nanoparticles in anatase phase by means of using a polyetheramine-type catalyst.
- EP 1 069 950 B1 published on 12.12.2001 "Photocatalytic composition" (Pascale Escaffre, Pierre Girard, Joseph Dussaud, Léonie Bouvier), referring to the proposal of a photocatalytic composition by adding commercial TiO2 nanoparticles to a commercial aqueous colloidal silicon dioxide dispersion for its possible use as a paint or filter coating.
- US 2007/0166467 A1 published on 19.07.2007 "Water dispersible silanes as corrosion-protection coatings and paint primers for metal pre-treatment" (by Ji Cui), referring to possible applications of coatings with a silane base resistant to corrosion.
- WO 1998/32473 published on 16.01.1998 "Reduction of emissions of volatile compounds by additives" (by Wolfgang Beilfuss, Ralf Graddtke, and Herbert Mangold.), referring to possible methods of absorption of volatiles through the use of additives.
- US 2006/7144840 B2 published on 05.12.2006 "TiO2 material and the coating methods thereof" (by King Lun Yeung and Nan Yao), referring to the state of the art on procedures and coatings based on TiO2 crystals and their physical-chemical properties.
- US 1996/5571359 published on 16.11.2007 "Radiation curable pigmentedcompositions" (by Melvin E. Kamen, and Bhupendra Patel), referring to the existing methods of photocurable inks and pigments.
- ES 2285868 T3 published on 16.11.2007 "UV-curable paint composition and process for its application to glass substrates" (by Rodrigo Cavazos Gutierrez), when referring to the state of the art on the use of photocurable paint for glass (bottles, labels, et cetera).
- ES 2401799 B1 published on 24.04.2014 "Process for the preparation of an additive comprising dispersed and supported TiO2 particles" (by Antonio Álvarez Berenguer, Aurora María Casado Barrasa, Antonio Esteban Cubillo, Javier Grávalos Moreno, Antonio José Sánchez Rojo, Julio Santarén Romé and José Vera Agulló), when referring to the state of the art on additive preparation processes which comprises TiO2 particles dispersed on a pseudolaminar phyllosilicate support for the use of photocatalytic-activity additives for the purification and disinfection of water and polluted gas currents in construction materials in presence of air and ultraviolet light.

### SCIENTIFIC PUBLICATIONS:

- "Electrochemical Photolysis of Water at a Semiconductor Electrode" Fujishima, A.; Honda, K., Nature 1972, 37, 238. When referring to the discovery of the photocatalytic dissociation of water on titanium dioxide electrodes
- "TiO2 Photocatalysis: A Historical Overview and Future Prospects" Hashimoto K., Irie, H; Fujishima, A., Jpn. J. Appl. Phys. 2005, 44 (12) 8269. When referring to the development of a large amount of research based on this photocatalytic semiconductor.
- "Titanium Dioxide coatings on stainless steel Encyclopedia of Nanoscience and Nanotechonology" Balasubramanian G.; Dionysiou D.D.; Suidan M.T. When referring to the basic principles of photochemical reactions which take place on the surface of photocatalysts in the presence of ultraviolet radiation.
- "Synthesis of Inorganic Materials" Wiley- VCH, Weinheim, (2005) Marcel Dekker; Schubert U., Husing N. When referring to the existing methods of on-site synthesis of TiO2 coating through photocatalytic methods.
- "Dip-coating of TiO2 films using a sol derived from Ti(O-i-Pr)4-diethanolamine-H2O-i-PrOH system" Takahashi, Y.; Matsuoka, Y. J. Mater. Sci. 1988, 23, 2259. When referring to the developments of the first syntheses of TiO₂ coatings which used diethanolamine (DEA) to control the titanium precursor (titanium isopropoxide) hydrolysis phase when water is added.
- "Low-Temperature deposition of TiO2 thin films with photocatalytic activity from colloidal anatase aqueous solutions" A.M. Peiró, J. Peral, C. Domingo, X. Doménech and J.A. Ayllón. Chemistry of Materials, 2001, 13, 2567-2573. When referring to an alternative method in which TiO2 layers are initially synthesized and later placed on the substrate.
- "Preparation of TiO2 coatings on PET monoliths for the photocatalytic elimination of trichloroethylene in the gas phase" Sánchez, B.; Coronado, J. M.; Caudal, R.; Pórtela, R.; Tejedor, I.; Anderson, M. A.; Tompkins, D.; Lee, T. Appl. Catal. B-Environ. 2006, 66, 295) Appl. Catal. B, 2006, 66(3-4): 295. When referring to obtaining TiO2 coatings using previously synthesized nanoparticles by a layer-by-layer deposition.

### DESCRIPTION OF THE INVENTION

The invention procedure is a preparation procedure of a gel-coat with a base of synthetic curable resin additivated with titanium dioxide and alumina particles. This new material, developed in contact with the volatile organic composites which form the environmental pollution in large cities, allows to photocatalytically deactivate NOx in presence of ultraviolet light. The material's preparation method has far softer preparation conditions regarding the curing, the temperature conditions and the necessary solvents, than standard preparation methods of this type of gel-coat.

The fields of application of coatings with this new type of based materials are numerous, ranging from new types of coatings in construction materials, urban items and transport vehicle bodies which allow to photocatalytically deactivate NOx in large cities, to the development of coatings for vessel surfaces which allow to avoid the attachment of sea life to hull vessels due to their biocidal effects.

The necessary steps in order to develop pieces through this new type of material are the following:

### Mould preparation

Moulds must be placed in a suitable environment (clean, without volatile particles in the air), with a temperature and humidity suitable for work, and checking that the temperature of the initial gel-coat is between 18-25°C before its use.

### Gel-coat Preparation

The gel-coat must be homogenized and, when utilized, only the previously estimated amount will be used for each mould. In the event of mould preparation with different gel-coat batches, they must be properly homogenized before their use, in order to avoid differences in their physical-chemical properties. For gel-coats of accelerated curing, before its use a 50% catalyst solution will be added, in order to achieve between 1.5 and 3.5% of the catalyst of the final weight of the mixture. For gel-coats of non-accelerated curing, before its use a 2% solution will be added, so that after having added it to the gel-coat, a 0.5-1.5% proportion is achieved. Subsequently, the catalyst will be added in the same conditions as in the aforementioned case. It must be reminded that excessive agitation may leave air in the composition and cause a lamination with micropores in the film of the cured gel-coat.

Thus, homogenization must be meticulously carried out in order to avoid bubble appearance.

### Gel-coat additivation with titanium dioxide and alumina particles

In the gel-coat, an initial additivation of between 1 and 25% of TiO2 (in anatase and rutile metastable phases) must be produced in the final weight of the mixture, additivated in powder with a granulometry lower than 20 nanometres of particle width. Afterwards, it will be additivated with Al2O3 in powder, also with a granulometry lower than 20 nanometres of particle width, in quantities between 5 and 25% of the final weight of the material. A perfect homogenization must be achieved through mechanical agitation no higher than 500 rpm for at least 15 minutes.

### Application of the gel-coat with additives.

The gel-coat must be normally applied on the predefined mould in the previous steps, in optimal standard working conditions for its application (avoid excessive humidity and temperature working conditions for its application).

### BRIEF DESCRIPTION OF THE DRAWINGS

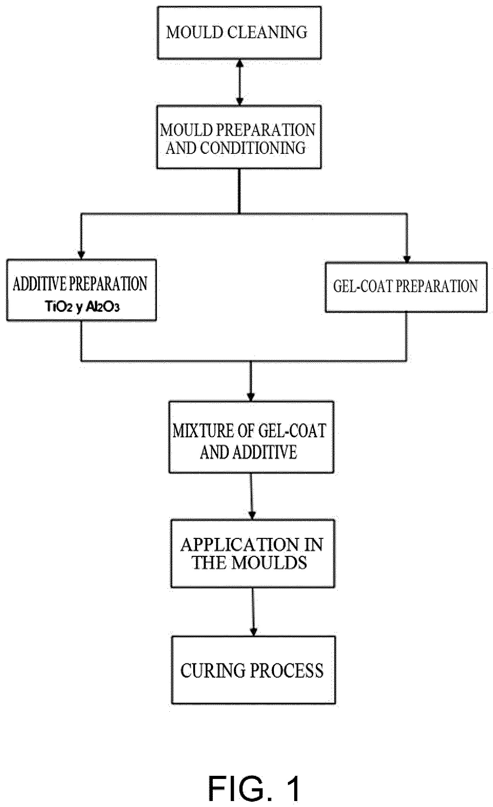

Figure 1.- Flowchart diagram of the process with the minimum steps required in order to be able to manufacture this new type of additivated material with TiO2 and Al2O3

### PREFERRED EMBODIMENT OF THE INVENTION

The new material obtained has direct application in the construction field, transport by road, rail, air or sea, as well as in the environment in general, as this type of material has several fundamental properties: photocatalytic properties in order to decompose NOx, self-cleaning, biocidal and deodorizing properties, all of which require the presence of air and ultraviolet light.

The invention herein additionally illustrates the preparation methods and fields of application through the following examples without intending to limit the scope of the invention.

Example 1. Preparation of gel-coat in moulds with polyester-based resins which do not require acceleration in order to be cured. See Figure 1.

Moulds must be placed in a suitable environment (clean, without volatile particles in the air), with a temperature and humidity suitable for work, and checking that the temperature of the initial gel-coat is between 18-25°C before its use. The base resin must be homogenized and, when utilized, only the previously estimated amount must be used for each mould. In the event of different resin batches, all of them must be properly homogenized before their use, in order to avoid differences in their physical-chemical properties. A catalyst solution will be added so that it achieves 2% in the mixture. This addition will be carefully performed. It must be taken into consideration that excessive agitation may leave air in the composition and cause a lamination with micropores in the film of the cured gel-coat. Thus, homogenization must be meticulously carried out in order to avoid bubble appearance. Afterwards, an initial additivation of 2% of TiO2 will be added to the base resin in the final weight of the mixture, additivated in powder with a granulometry lower than 20 nanometres of particle width. Afterwards, it will be additivated with Al2O3 in powder, also with a granulometry lower than 20 nanometres of particle width, in an amount of 6% of the final weight of the material. A perfect homogenization must be achieved through mechanical agitation no higher than 500 rpm for at least 15 minutes. Then, the gel-coat composition must be applied on the predefined mould in the previous steps in a standard manner, in optimal standard working conditions for its application (avoid excessive humidity and temperature working conditions for its application).

Example 2. Preparation of gel-coat in moulds with polyester-based resins which require acceleration in order to be cured. See Figure 1.

Moulds must be placed in a suitable environment (clean, without volatile particles in the air), with a temperature and humidity suitable for work, and checking that the temperature of the initial gel-coat is between 18-25°C before its use. The base resin must be homogenized and, when utilized, only the previously estimated amount must be used for each mould. In the event of different resin batches, all of them must be properly homogenized before their use, in order to avoid differences in their physical-chemical properties. For the resins that require the use of accelerators, before its use an accelerator must be added to the resin to achieve a 0.5-1.5% proportion. Subsequently, the catalyst will be carefully added. It must be reminded that excessive agitation may leave air in the composition and cause a lamination with micropores in the film of the cured gel-coat. Thus, homogenization must be meticulously carried out in order to avoid bubble appearance. Afterwards, an initial additivation of 1% of TiO2 will be added to the base resin in the final weight of the mixture, additivated in powder with a granulometry lower than 20 nanometres of particle width. Afterwards, it will be additivated with Al2O3 in powder, also with a granulometry lower than 20 nanometres of particle width, in an amount of 5% of the final weight of the material. A perfect homogenization must be achieved through mechanical agitation no higher than 500 rpm for at least 15 minutes. Then, the gel-coat composition must be applied on the predefined mould in the previous steps in a standard manner, in optimal standard working conditions for its application (avoid excessive humidity and temperature working conditions for its application).

### INDUSTRIAL APPLICATION OF THE INVENTION.

The application of this type of materials at an industrial level can be found in numerous industrial sectors:
Transportation industry. One of the most relevant challenges faced by the twenty-first-century transportation industry is the development of materials environmentally sustainable but also functional and with affordable manufacturing costs. The use in large cities of vehicle bodies which have on their outside this new type of photocatalytic material as coating, which are in usual contact with visible light and atmospheric pollutant gases (NOx), allows to produce a chemical reaction on the surface of the vehicle body capable of decomposing such environmentally unfriendly organic compounds, indirectly contributing to reducing, as far as possible, atmospheric pollution as the vehicle passes by.

Maritime transport industry. It has been proven that, on surfaces covered by an exterior gel-coat with these new types of materials, the growth of bacteria, algae and fungi is prevented on certain surfaces, as these materials have a biocidal effect partly thanks to the generation of hydroxyl radicals. Therefore, a direct application exists in using this new type of photocatalytic materials applied to the surface of new vessels, which will allow to reduce both the time and cost of cleaning work on vessels (especially on the hull, below and above the waterline) and the fuel costs by improving its incidence coefficient in water, as well as allowing to lengthen the lifespan of vessels by avoiding corrosion on the vessel surfaces.

Construction industry. In the construction of sustainable buildings, architects take into consideration amongst their parameters, with an increasing frequency, the possibility to have a lower impact on the environment. Through the use of external building surfaces made out of this new photocatalytic material, the building's external surroundings will be decontaminated through this type of photocatalytic reactions.

The term "mould" (see **Figure 1**) as used herein is understood as any device used to shape a gel-coat before the curing process.

The term "resin" as used herein is understood as any thermostable polymer that undergoes a cross-linking chemical reaction, thus increasing its hardness physical properties when mixed with a catalyzing agent.

The term "catalyst" as used herein is understood as any chemical substance which manages to increase the rate of a chemical reaction, and whose mass is modified during the aforementioned reaction.

The term "granulometry" as used herein is understood as any grading undergone by the materials, indicating in length units the maximum size that an aggregate particle of the measured material can have.

The term "accelerator" as used herein is understood as any chemical substance which manages to accelerate the rate of a chemical reaction, and whose mass is reduced during the aforementioned reaction.

The term "curing process" (see **Figure 1**) as used herein is understood as any polymerization process that has taken place, originating a cross-linking chemical reaction of the gel-coat chains due to the addition of a catalyzing agent and/or accelerator.

The new material and/or claimed methods herein can be performed and executed without due experimentation, in view of this description. It is evident that a person skilled in the art can introduce variations in the step sequence of the method described in the particular realizations section and in Figure 1 herein, without deviating from the concept, spirit and scope of the invention. All of these similar modifications for those skilled in the art are considered within the spirit, scope and concept of the invention, as defined by the attached claims.

## Claims

1. A new gel-coat additivated with titanium dioxide and alumina particles, wherein:
• Between 50 and 94% of the total weight of a synthetic cured resin which can be selected from the family of polyesters, the family of vinyl esters, the family of epoxy resins, or equivalent combinations of these.
• A chemical catalyst to cure this resin.
• Between 1 and 25% of the total weight of titanium dioxide (TiO2 in its metastable anatase and rutile phases) with a granulometry lower than 20 nanometres.
• Between 5 and 25% of the total weight of aluminium oxide (Al2O3) in powder, also with a granulometry lower than 20 nanometres.

2. A procedure to prepare this gel-coat according to claim 1 comprises, at least, the combination of at least titanium dioxide with at least one polyester resin, and/or an epoxy resin, and a chemical catalyst in order to create a gel-coat composition.

3. A step of the procedure to prepare a composition of this gel-coat according to claim 1 comprises, at least, a perfect homogenization of the combined elements.

4. A procedure step to prepare a composition of this gel-coat according to claim 1 comprises, at least, a curing process of this composition.

5. A procedure to prepare a gel-coat composition according to claim 4 comprises applying this gel-coat composition to an item, followed by a curing process.

6. A procedure to prepare a gel-coat composition, according to claim 5, in which the item on which it is applied may be any external element in contact with air and light, and in particular, but not limited to, surface elements in construction panels, surface elements of urban materials (such as benches, fences, covers, roofs, et cetera), external elements of transport vehicle bodies, external elements of vessels both above and below the vessel's waterline, external elements of windmills, constituent elements of pools, baths, showers, bathrooms, pipes, and water storage tanks.
